# EUROPEAN PATENT APPLICATION

(11) **EP 0 872 725 A1**
(43) Date of publication of application: **21.10.1998**
(21) Application number: 98302813.5
(22) Date of filing: 09.04.1998
(51) Int. Cl.: G01N 25/72

(54) **Method for detecting defect in ceramic body and apparatus therefor**

(30) Priority: 15.04.1997 US 839250
(71) Applicant: EATON CORPORATION, Cleveland, Ohio 44114-2584 (US)
(72) Inventor: Suman, Andrew Walter, Waterford, Michigan 48329 (US)
(74) Representative: West, Alan Harry

(57) **Abstract**

Subsurface defects in a non-electrically conductive ceramic body are detected by heating the body to form a temperature gradient and infrared imaging the surface of the body to determine temperature norms and temperature deviates indicative of subsurface defects.

## Description

### BACKGROUND OF THE INVENTION

### 1. Field of the Invention

The present invention relates generally to a method, and an apparatus therefor, for detecting a subsurface defect in a non-electrically-conductive ceramic body and, more particularly, to a method, and an apparatus therefor, for detecting a subsurface defect in a non-electrically-conductive ceramic body using infrared imaging.

### 2. Description of the Related Art

Non-electrically-conductive ceramic materials, such as silicon nitride, have become important materials in today's world because of their typically excellent characteristics such as strength, hardness, thermal stability, and chemical stability. Silicon nitride has found use in such critical parts as pistons used in automotive engines. In the manufacture of such silicon nitride parts, much care is taken to ensure the quality of the parts to avoid malfunction of the part in its intended use.

However, some ceramic parts made with tremendous care are still manufactured with microscopic subsurface defects, such as pores or cracks, which, because they are subsurface, cannot be seen by observation.

It is, therefore, desirable to have a method for detecting subsurface defects in ceramic bodies. It is desirable that the method be capable of being used in production of ceramic bodies, i.e. capable of being performed at a production rate. It would also be desirable to have the method be capable of detecting subsurface defects anywhere in the ceramic body, not only a portion of the ceramic body. To accomplish the method, is would be advantageous to have available an apparatus which is capable of detecting subsurface defects in non-electrically-conductive ceramic bodies.

Therefore, the present invention seeks to provide a method for detecting subsurface defects in a ceramic body.

Another advantage being sought by the invention is the provision of a method for detecting subsurface defects in non-electrically-conductive ceramic bodies which method is capable of examining ceramic bodies at the rate of the manufacture of the ceramic bodies.

Yet another advantage being sought is the provision of an apparatus which is capable of detecting subsurface defects in non-electrically-conductive ceramic bodies.

### SUMMARY OF THE INVENTION

In accordance with the present invention, a method for detecting a subsurface defect (18) in a non-electrically-conductive ceramic body (16) is disclosed. The method includes (a) heating the non-electrically-conductive ceramic body (16), (b) allowing a temperature gradient to be formed from the inside to the outside of the heated non-electrically-conductive ceramic body (16), and (c) infrared imaging the surface temperature of the ceramic body (16) when the temperature gradient is present in the heated ceramic body (16). The infrared imaging is performed in part by directly viewing the surface of the ceramic body (16) with an infrared scanner (14) which detects temperature differences between areas of temperature norms and areas of temperature deviates. A temperature-deviate area indicates a subsurface defect (18) in the ceramic body (16) below the temperature-deviate area.

Another embodiment of the present invention is a method for detecting a subsurface defect (18) in a non-electrically-conductive ceramic body (16) in which the method includes (a) heating the non-electrically-conductive ceramic body (16) until the entire ceramic body (16) reaches a uniform elevated temperature; (b) allowing a temperature gradient to be formed from the inside to the outside of the heated non-electrically-conductive ceramic body (16) by cooling the heated non-electrically-conductive ceramic body (16) at a rate of at least about 1°/c second; and (c) imaging the surface temperature of the ceramic body (16) by infrared imaging when the temperature gradient is present in the heated ceramic body (16). As in the first embodiment of the present invention, the infrared imaging is performed in part by directly viewing the surface of the ceramic body (16) with an infrared scanner (14), and the imaging is conducted to indicate areas of temperature norms and of temperature deviates, a temperature-deviate area indicating a subsurface defect in the ceramic body (16) below the temperature-deviate area.

A third embodiment of the present invention is an apparatus for detecting a subsurface defect (18) in a non-electrically-conductive ceramic body (16). The apparatus includes a heating device (10) for heating the ceramic body (16) to a uniform temperature, a cooling device (12) which is capable of cooling the heated ceramic body (16) at a rate of at least about 1°C/second; and an infrared scanner (14) which is capable of detecting temperature differences in the surface temperature of the ceramic body (16) while the ceramic body (16) cools.

Other advantages of the present invention will be readily appreciated as the same becomes better understood after reading the subsequent description taken in conjunction with the appendant drawings.

### BRIEF DESCRIPTION OF THE DRAWINGS

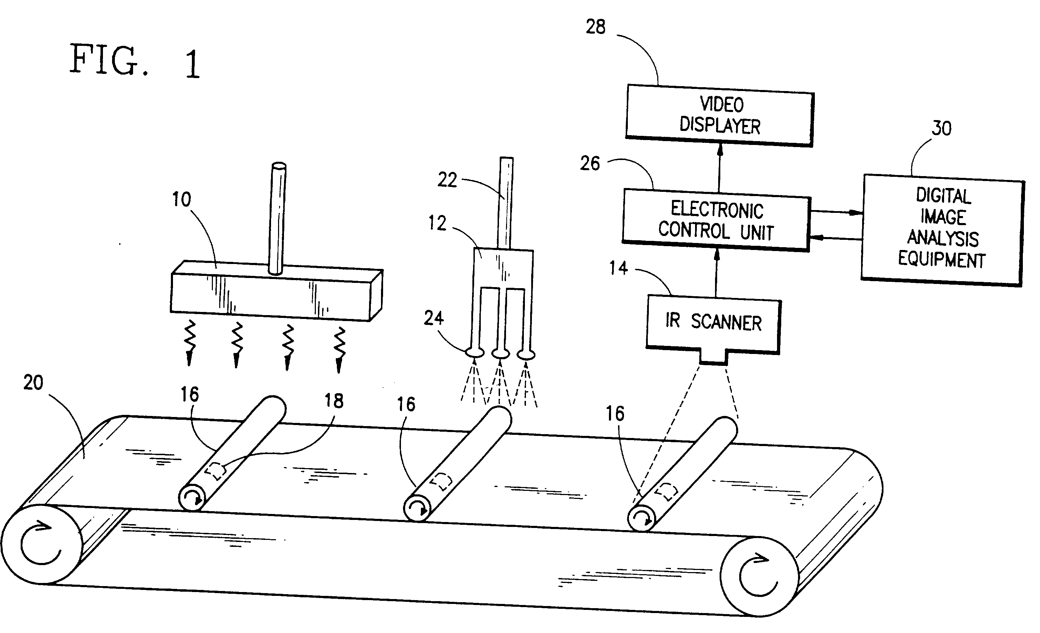

FIG. 1 is a perspective view of an apparatus according to the present invention.

### DESCRIPTION OF THE PREFERRED EMBODIMENT(S)

One embodiment of the present invention is a method for detecting subsurface defects in a non-electrically-conducting ceramic body. The method includes (a) heating the non-electrically-conductive ceramic body, (b) allowing a temperature gradient to be formed from the inside to the outside of the heated non-electrically-conductive ceramic body, and (c) imaging the surface temperature of the ceramic body by infrared imaging when the temperature gradient is present in the heated ceramic body. The infrared imaging shows temperature-norm and temperature-deviate areas, the temperature-deviate areas indicating subsurface defects in the ceramic body below the temperature-deviate area.

The non-electrically-conductive ceramic body to be tested by the method of the present invention may be formed of any type of non-electrically-conductive ceramic material, such as silicon nitride. The ceramic body may generally be any size or shape. Typically, for silicon nitride, the bodies are from about 5 to about 60 grams in weight. In the manufacture of such ceramic bodies, it is possible that subsurface defects are formed. The defects may be caused by non-homogeneity of the components used to form the ceramic body or by processing methods, such as improper heating schedules, etc. The defect may be, e.g., a crack, a pore, or an inclusion of material in an area of non-homogenous chemical composition. Although a macroscopic defect in a ceramic body is possible, the present invention is particularly suitable for microscopic defects.

The heating of the ceramic body may be accomplished by convection, non-electrical conduction, or radiation. For example, the heating may be performed by heating the ceramic body in a furnace, by contacting the ceramic body to a hot body, such as a hot roller, or by using a laser or optical energy source, such as a heat lamp. The heating may be a) performed until the entire ceramic body reaches a preselected elevated temperature and then ceased, or b) intermittent during the infrared imaging process, or c) performed continuously during the infrared imaging process.

When the heating of the ceramic body is performed until the entire ceramic body reaches an elevated temperature, the time required to heat the ceramic body to such a uniform temperature may be determined empirically without undue experimentation.

The elevated temperature may be any temperature greater than normal room temperature (23°C), preferably, greater than about 50°C and, more preferably, greater than about 100°C. It is preferred that the temperature be as low as possible, yet still enable the detection of subsurface defects. Minimizing the elevated temperature is preferred to avoid damage to the ceramic bodies and to conserve energy.

In whatever mode of heating employed, the heating must be performed so that a temperature gradient is formed from the inside to the outside of the ceramic body. The phrase "temperature gradient is formed from the inside to the outside of the ceramic body" is used herein to mean that the temperature either ascends or descends from the inside to the outside of the ceramic body. The temperature gradient is formed because the flow of heat is either predominantly from the surface of the ceramic body toward the center of the ceramic body or predominantly from the center of the ceramic body to the surface of the ceramic body.

When a defect, such as a pore or a crack, is present in the ceramic body, the flow of heat through the defect is slower than the flow of heat through a continuous (non-defected) portion of the ceramic body. The area on the surface which is above a subsurface defect in the ceramic body will, therefore, have a different temperature than the remaining areas of the surface. For instance, if the ceramic body is heated to a uniform elevated temperature, then allowed to cool, the flow of heat will be outwardly from inside the ceramic body. Since the continuous (non-defected) portion of the ceramic body conducts heat better than the defected portion of the ceramic body, heat tends to flow to the surface of the ceramic body via the continuous portion of the ceramic body. Therefore, the surface temperature of the ceramic body above the continuous portions of the ceramic body is higher than the surface temperature of the ceramic body above defected portions of the ceramic body.

If the heating is continuous or intermittent during the infrared imaging of the ceramic body, the heating is performed such that the entire ceramic body does not reach a uniform temperature. In this instance, the direction of heat flow is predominantly toward the center of the ceramic body. Since the continuous portions of the ceramic body conduct heat inwardly faster than the defected portions of the ceramic body, the surface area above the continuous portions of the ceramic body has a lower temperature than the surface area above the defected portions of the ceramic body.

When a defect, such as an inclusion of a grain of metal, is present in the ceramic body, the flow of heat through the inclusion is faster than the flow of heat through a non-defected portion of the ceramic body. Therefore, the flow of heat and relative temperatures with metal inclusion defects are the opposite to those with pore or crack defects.

The temperature gradient (and the rate of flow) may be controlled by the manner of heating the ceramic body or by cooling the heated ceramic body. If the temperature gradient is controlled by cooling, the cooling of the heated ceramic body may be performed by, e.g., pressurized-air cooling, liquid bath cooling, exposing to ambient conditions, contacting with a cold body, or cold-chamber cooling. The cooling may be performed on the entire ceramic body or may be performed on a portion of the ceramic body, so long as the portion being cooled is the portion which is to be infrared imaged.

The desirable rate of cooling depends on the type of ceramic material being tested and the size of the ceramic body. It is advantageous to cool as quickly as possible for easier and faster determination of the subsurface defects. However, the cooling should not be so fast as to damage the ceramic body. Typically, the cooling is performed at a rate of at least about 1°C/second, preferably, at least about 2°C/second, more preferably, at least about 10°C/second, and most preferably, at least about 20°C/second.

As mentioned, the infrared imaging is performed in part by an infrared scanner. The infrared scanner includes a camera which detects temperature differences (i.e., differences in the level of infrared radiation) relative to location on the ceramic body surface and converts the differences in infrared radiation into video output signals each representative of the intensity and location of the infrared radiation. Because the defects in a ceramic body would be the size that could not be seen by the naked eye, the camera is equipped for microscopic viewing.

In the present invention, the scanner directly views the surface of the ceramic body rather than viewing a transferred heat pattern of the ceramic body or some other method of viewing. It is preferred that the scanner be adapted to detect radiation in a specified wavelength which is different from the radiation being emitted from the heating device so that the scanner will not detect background or reflected radiation.

The video compatible signals created by the infrared scanner are transmitted to an electronic control unit which prepares them for display as a thermographic map showing different temperature zones as they exist on the surface of the ceramic body. The thermographic map may be displayed on either a black and white or color monitor and may be recorded for permanent record. The different temperature zones may be indicated either by variation in brightness or variation in color on the thermographic map.

Generally, the ceramic body being tested has more non-defected portions than defected portions, and, for this reason, the surface areas which are above non-defected portions of the ceramic body will be referred to as areas of temperature norms. The surface areas which are above defected portions of the ceramic body will be referred to as areas of temperature deviates. In the example where heating is continuous or intermittent during the surface imaging process and the defects are cracks or pores, areas of temperature norms will have a lower temperature than the areas of temperature deviates. The reverse occurs when the defect is a metal inclusion. On the other hand, in the example where heating is performed to a specified elevated temperature and then the ceramic body is cooled and the defects are cracks or pores, the areas of temperature norms will have a higher temperature than the areas of temperature deviates. The reverse occurs when the defect is a metal inclusion.

The difference in temperature between a temperature-deviate area and a temperature-norm area necessary to detect a subsurface defect depends on the sensitivity of the imaging equipment. Typically, the desired difference in temperature between a temperature-deviate area and a temperature-norm area is at least about 0.1°C, preferably at least about 1°C, and, more preferably, at least about 2°C.

Another embodiment of the present invention is an apparatus for detecting a subsurface defect in a non-electrically-conductive ceramic body. The apparatus includes a heating device for heating the ceramic body to a uniform temperature; a cooling device which is capable of cooling the heated ceramic body at a rate of at least about 1°C/second; and an infrared scanner which is capable of detecting the variation in surface temperature of the ceramic body while the ceramic body cools. Preferably, the cooling device is capable of cooling the heated ceramic body at a rate of at least about 2°C/second, more preferably, at least about 10°C/second, and, most preferably, at least about 20°C/second.

Figure 1 is an illustration of the apparatus of the present invention which includes heating device 10, cooling device 12, and infrared scanner 14. Ceramic body 16 having subsurface defect 18 is shown at various stages of testing with the apparatus. Ceramic body 16 is shown being transported to each element of the apparatus by roller assembly 20.

Heating device 10 may be any type of heating device as discussed hereinabove, however, heating device 10 is illustrated as a radiant heater. Cooling device 12 may be any type of cooling device such as a forced-air device, a liquid bath, a cold body, or a cold chamber. Cooling device 12 is shown as a forced-air device. Pressurized air supplied through pipe 22 is forced through outlets 24 onto heated ceramic body 16. By so doing, heated ceramic body 16 is cooled on the surface, but maintains a higher internal temperature.

Infrared scanner 14 detects the level of infrared radiation relative to location on the ceramic body surface and converts the detected level of infrared radiation into a video output signal representative of the intensity and location of the infrared radiation. The video compatible signals are transmitted to electronic control unit 26 which prepares them for the video displayer 28. The signals are displayed as a thermographic map on a monitor and/or may be recorded for permanent record using a video recorder.

Alternative to or in conjunction with video displayer 28, the apparatus of the present invention may include digital image analysis equipment 30. Digital image analysis equipment may include both the hardware and software needed to analyze signals from electronic control unit 26. Digital image analysis equipment 30 may digitize the signals and flag areas of defects or send information back to electronic control unit 26 to be shown on video displayer 28.

During operation of the apparatus of the present invention shown in Figure 1, ceramic body 16 having subsurface defect 18 is placed on roller assembly 20, where it is first heated to a uniform elevated temperature by heating device 10. Heated ceramic body 16 is then transferred to be cooled by cooling device 12 to create a temperature gradient in ceramic body 16 to the point that the area above defect 18 registers a lower temperature than the remaining surface area of ceramic body 16. Cooling ceramic body 16 is then transferred to be scanned by infrared scanner 14 which detects the levels of infrared radiation relative to location on the surface of ceramic body 16. The detected levels of infrared radiation are converted by the infrared scanner 14 into video output signals which are transmitted to electronic control unit 26. Electronic control unit 26 then prepares the video output signals for display on video displayer 28 or for analysis by digital image analysis equipment 30.

The industrial applicability of the method and apparatus of the present invention includes their use in a production facility of ceramic bodies. By using the method and/or apparatus of the present invention, ceramic bodies may be tested for defects directly after they have been produced.

## Claims

1. A method for detecting a subsurface defect in a non-electrically-conductive ceramic body, the method comprising:
(a) heating the non-electrically-conductive ceramic body;
(b) allowing a temperature gradient to be formed from the inside to the outside of the heated non-electrically-conductive ceramic body; and
(c) imaging the surface temperature of the ceramic body by infrared imaging when the temperature gradient is present in the heated ceramic body, the infrared imaging performed in part by directly viewing the surface of the ceramic body with an infrared scanner, the imaging conducted to indicate areas of temperature norms and of temperature deviates, a temperature-deviate area indicating a subsurface defect in the ceramic body below the temperature-deviate area.

2. The method according to claim 1, wherein the heating is accomplished by convection.

3. The method according to claim 1, wherein the heating is performed by intermittent exposure of the ceramic body to a heat source, the intermittent frequency being at most one exposure per 0.1 second.

4. The method according to claim 1, wherein the temperature-deviate area indicating the subsurface defect has a temperature which is at least about 2°C different than the temperature of the temperature-norm areas.

5. The method according to claim 1, wherein heating the non-electrically-conductive ceramic body is performed until the entire ceramic body reaches a uniform elevated temperature.

6. The method according to claim 5, wherein the elevated temperature is at least about 50°C.

7. The method according to claim 1, wherein allowing a temperature gradient to form in the heated non-electrically-conductive ceramic body is accomplished by cooling the heated non-electrically-conductive ceramic body, the areas of temperature norms then being higher than the areas of temperature deviates.

8. The method according to claim 7, wherein the cooling is performed at a rate of at least about 1°C/second.

9. The method according to claim 8, wherein the cooling is performed by methods selected from the group consisting of forced-air cooling, liquid cooling, contacting with a cold body, and cold-chamber cooling.

10. A method for detecting a subsurface defect in a non-electrically-conductive ceramic body, the method comprising:
(a) heating the non-electrically-conductive ceramic body until the entire ceramic body reaches a uniform elevated temperature;
(b) allowing a temperature gradient to be formed from the inside to the outside of the heated non-electrically-conductive ceramic body by cooling the heated non-electrically-conductive ceramic body at a rate of at least about 1°C/second; and
(c) imaging the surface temperature of the ceramic body by infrared imaging when the temperature gradient is present in the heated ceramic body, the infrared imaging performed in part by directly viewing the surface of the ceramic body with an infrared scanner, the imaging conducted to indicate areas of temperature norms and of temperature deviates, a temperature-deviate area indicating a subsurface defect in the ceramic body below the temperature-deviate area.

11. An apparatus for detecting a subsurface defect in a non-electrically-conductive ceramic body, the apparatus comprising:
a heating device for heating the non-electrically-conductive ceramic body to a uniform temperature;
a cooling device which is capable of cooling the heated ceramic body at a rate of at least about 1°C/second; and
an infrared scanner which is capable of detecting the variation in surface temperature of the ceramic body while the ceramic body cools.

12. The apparatus according to claim 11, wherein the cooling device is selected from the group consisting of a forced-air device, a liquid bath, a cold body, and a cold chamber.
